# EUROPEAN PATENT SPECIFICATION

(11) **EP 4 017 805 B1**
(45) Date of publication and mention of the grant of the patent: **11.01.2023**
(21) Application number: 21746557.4
(22) Date of filing: 28.06.2021
(51) Int. Cl.: B65B 29/02, B65B 7/28, B65B 51/14, B65B 51/22, B65B 61/28, B29C 65/00, B65D 85/804, B32B 7/12, B29C 65/18, B29C 65/78

(54) **APPARATUS AND METHOD FOR APPLYING AN ANNULAR BODY TO A PERIMETER FLANGE OF A CONTAINER**
VORRICHTUNG UND VERFAHREN ZUM ANBRINGEN EINES RINGFÖRMIGEN KÖRPERS AN EINEM UMFANGSFLANSCH EINES BEHÄLTERS
APPAREIL ET PROCÉDÉ D'APPLICATION D'UN CORPS ANNULAIRE SUR UNE BRIDE PÉRIPHÉRIQUE D'UN RÉCIPIENT

(30) Priority: 29.06.2020 IT 202000015670
(43) Date of publication of application: 29.06.2022
(73) Proprietor: Sarong Societa' Per Azioni, 42046 Reggiolo (RE) (IT)
(72) Inventor: BARTOLI, Andrea, 19031 Ameglia (La Spezia) (IT); CAPITINI, Davide, 19031 Ameglia (La Spezia) (IT)
(74) Representative: Persi, Patrizia
(86) International application number: PCT/IB2021/055746
(87) International publication number: WO 2022/003526

(56) References cited:
- EP-A1- 2 557 041
- EP-A1- 3 575 241
- WO-A1-2017/106191
- WO-A1-2019/092144
- WO-A1-2020/128961
- US-A- 3 511 018

## Description

This invention relates to an apparatus and an application method for applying an annular body to a perimeter flange of a container.

More in detail, the invention can be advantageously applied in an apparatus and a method for applying a sealing ring to a perimeter flange of a container, wherein the container comprises a base wall and a lateral wall from which extends the perimeter flange, in a production process for making a capsule for beverages, the sealing ring being made of a cellulose-based material, for example paper or paperboard.

The container may, advantageously, be made of aluminium.

Prior art packages for food products are known, which are sealed in such a way as to contain the product in a hermetically sealed manner, at the same time extending the life of the product and maintaining its organoleptic properties.

Of these, capsules for beverages are increasingly widespread which can be used on automatic dispensing machines.

The capsules known for use on dispensing machines are single-use and single-dose packages comprising a container, that is to say, an outer casing, having the shape of a glass or cup. The casing usually has a base wall and a lateral wall defining a cavity containing the initial product, for example ground coffee, tea, or a preparation for chocolate, from which to obtain the final product, for example the beverage. A perimeter flange extends from the lateral wall and is positioned around the cavity, on the opposite side relative to the base wall.

The cavity, at a relative opening, is hermetically sealed by a covering element, fixed to the perimeter flange edge, in such a way as to seal the initial product inside the container.

The capsule can be used in a dispensing machine in which the capsule can be inserted by a user in a chamber of the dispensing machine.

During dispensing, the base wall of the capsule is perforated by an injection device for injecting liquid under pressure, for example water, into the capsule and the covering element is perforated by a dispensing device of the dispensing machine to allow the final product to be dispensed.

The dispensing device of the dispensing machine comprises a dispensing plate equipped with a plurality of pointed elements which, when the pressure of the fluid inside the capsule increases, engage with the covering element and perforate it in a plurality of different zones.

The final product can flow into a use container through the perforations formed by the dispensing device of the dispensing machine.

In order to achieve a successful dispensing, the capsule also comprises a sealing element positioned at the perimeter flange, which is configured to make a fluid-tight seal with the dispensing machine, in particular with the housing element of the dispensing machine in which the capsule can be inserted, the housing element being shaped like a protrusion.

The sealing element prevents an escape of the pressurised liquid at the high operating pressures of the dispensing machine and, in use, is crushed between the housing element of the dispensing machine and the dispensing plate of the dispensing device.

An example of a capsule with a sealing element is provided in patent document EP1654966, in which the container, that is to say, the casing, is made of aluminium and the sealing element is an elastic ring made of silicone rubber fixed to the perimeter flange.

Using aluminium for the casing of the capsule is particularly advantageous because it enables the initial product to be preserved in the cavity for a long time, as it is impermeable to oxygen and water vapour. However, placing the elastomeric ring in the aluminium casing requires devices for applying silicone rubber to the perimeter flange and it is difficult to produce, with the consequence that, if the sealing element is applied imprecisely, undesired water leaks may occur during dispensing of the beverage.

In addition, even though the aluminium by itself is recyclable, a body formed by the aluminium casing and by the silicone rubber sealing element is no longer recyclable and this constitutes a problem for the increasingly felt need to make an entirely recyclable product for the purposes of waste disposal.

For this purpose, capsules are widespread on the market wherein the container, that is to say, the casing, is made of aluminium and the sealing element is a ring made of compostable material, for example it is made of paper, or natural fibres, to guarantee that the capsule only has compostable or entirely recyclable components.

In the prior art capsules with an aluminium casing, the perimeter flange is planar and comprises an annular end bead, at which a border of the aluminium casing is folded on itself in accordance with the prior art, the annular end bead extending symmetrically, in a direction parallel to an axis of symmetry of the capsule, towards the base wall and on the side opposite thereto.

The ring of cellulose-based material may be applied to the aluminium casing, either before filling the cavity or when the capsule has already been filled, when the initial product has already been closed in the cavity by the covering element.

This application is particularly delicate since it is necessary to guarantee the correct coupling of the ring without any damage/deformation of the casing or the ring.

WO2017106191 describes a non-woven fabric which can be used to make coffee filters and/or capsules for beverages in a thermoforming process.

WO2019092144 describes a coffee capsule made of aluminium which comprises a cellulose-based sealing element, the capsule being closed by an aluminium film. The sealing element may be heated from below when the film is attached, or from above.

WO2020128961 describes a method for making a capsule for preparing beverages, the capsule having a body provided with a cavity and an annular flange. The method comprises laying a sheet of a covering element on the cavity and on the annular flange and folding a peripheral zone of the covering element around an outer end of an annular flange.

In particular, in the production process for making the capsule, it is necessary to guarantee the correct coupling and retaining of the ring to prevent undesired leaks of water during dispensing of the beverage or that the ring is not very secure and not very adherent to the capsule. Moreover, it is necessary to guarantee that the ring cannot remain attached to the housing element of the dispensing machine, preventing the automatic release of the capsule at the end of the beverage dispensing procedure, since the ring forms friction with the ejection guides of the dispensing machine.

When the capsule is not expelled automatically, the user is forced, for example, to detach the capsule from the ejection guides manually.

In this context, the technical purpose which forms the basis of the invention is to provide an apparatus and a method for the application of an annular body to a perimeter flange of a container which overcomes at least some of the above-mentioned drawbacks of the prior art.

More specifically, the aim of the invention is to provide an apparatus and a method for applying an annular body to a perimeter flange of a container which is able to guarantee a correct, stable and efficient coupling between the annular body and the container, in such a way as to make a sealing element which prevents undesired leaks of water during dispensing of the beverage from the capsule obtained from it and at the same time promotes the correct releasing of the capsule at the end of the dispensing process.

The technical purpose indicated and the aims specified are substantially achieved by an apparatus and a method for the application of an annular body to a perimeter flange of a container comprising the technical features described in one or more of the appended claims.

According to the present invention, an apparatus for applying a cellulose-based annular body to a perimeter flange of a container, preferably a capsule for beverages, is disclosed.

The apparatus comprises a supporting unit.

The supporting unit has a seat configured to receive a body of the container by insertion therein and is surrounded by an annular portion on which the annular body and the perimeter flange rest, in such a way that the annular body is interposed in use between the annular portion and the perimeter flange.

The apparatus comprises a heating device.

The supporting unit and the heating device are reciprocally movable along an axis of movement between a spaced position in which the heating device is inactive and an activation position wherein the heating device is active and is positioned in contact with the perimeter flange to heat the annular body through the perimeter flange.

The supporting unit comprises an annular recess, surrounding the annular portion, suitable for housing at least partly an annular end bead of the perimeter flange.

The apparatus also comprises a forming device, which is movable along a respective axis of movement between a far position and an engaging position wherein the forming device engages and deforms the annular bead pushing the annular bead into the annular recess.

Advantageously, the apparatus according to the invention makes it possible to apply an annular body to the perimeter flange of a container in a particularly efficient and stable manner, avoiding the risk of damage and/or deterioration of the individual components during their processing.

In fact, both the heating device and the forming device are configured to reinforce a coupling of the annular body to the container which is performed both by means of a heating coupling and by means of a mechanical deformation coupling of the annular bead, in such a way that the annular body cannot accidentally detach itself from the perimeter flange of the container when, during dispensing, liquid is injected under pressure in the capsule obtained from it, when the capsule is used in a dispensing machine. It should also be noted that, thanks to the shape of the annular bead deformed around the annular body and moved towards a base wall of the container, a recess is formed in which the annular body is entirely housed. Thanks to this shape of the annular bead, the defectiveness associated with failure to release the capsule at the end of dispensing can be reduced. The invention also relates to a method for applying a cellulose-based annular body to a perimeter flange of a container, preferably in a production process for making a capsule for beverages.

The method is performed by preparing a supporting unit having a through seat and an annular edge portion surrounding the seat and inserting in the seat the annular body and the container in such a way that the annular body is interposed between the annular portion and the perimeter flange.

Then heat is applied to the perimeter flange in such a way as to heat the annular body through it.

Moreover, deforming of an annular end bead of the perimeter flange is performed, wherein the deforming step is performed by pushing the annular end bead into an annular recess of the supporting unit positioned outside the annular portion.

The step of applying heat to the perimeter flange and the step of deforming the annular bead can be performed in a single operating station or in respective processing stations which are independent and located in succession along a path for processing the container.

Advantageously, the method described here provides a useful procedure for applying the annular body to the container in which the chemical/physical structural properties of the annular body are maintained.

The dependent claims relate to different embodiments of the invention. Further features and advantages of the invention are more apparent in the non-limiting description which follows of a preferred non-limiting embodiment of an apparatus and a method for applying an annular body to a perimeter flange of a container, as illustrated in the accompanying drawings, in which:

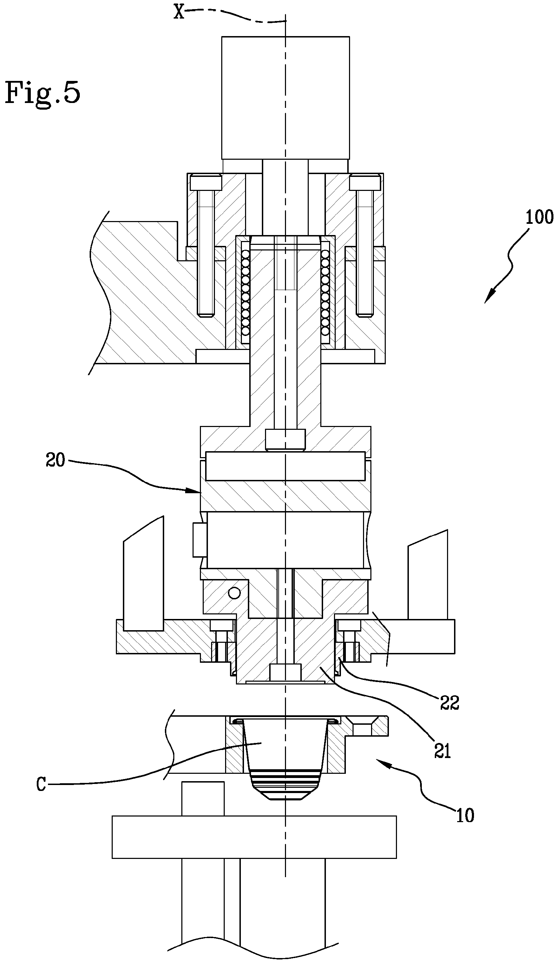

- Figures 1 to 5 show different operating configurations of an apparatus for applying an annular body to a container, which comprises a supporting unit configured to receive a body of the container and an operating unit comprising a heating device and a forming device, the heating device being housed in the forming device;
- Figures 6A and 6B show in detail two different operating positions of a component of the apparatus, that is, of the forming device;
- Figures 7 to 9 show different operating configurations of a further component of the apparatus, that is to say, of an expulsion unit, associated with or associable with the supporting unit, configured to expel the container from a seat of the supporting unit in which it is inserted;
- Figure 10 shows a processing station comprising the supporting unit configured to receive the body of the container, an abutment device and a forming device, the abutment device being housed in the forming device;
- Figure 11 shows a version of the heating device, which is positioned in a respective processing station, independent of the processing station of the forming device of Figure 10, said processing stations being located in succession along a path for processing the container.

The numeral 100 in the accompanying drawings generically denotes an apparatus for applying an annular body "A" to a perimeter flange "P" of a container "C", to which reference is made below in the present description simply as the apparatus 100.

More specifically, the apparatus 100 has a high performance level in the application of cellulose-based annular bodies "A", that is to say, made as a ring of paper, or paperboard, or of natural fibres, or with a composition comprising a combination of these materials, to the perimeter flange "P" of a container "C", in a production process for making a capsule for beverages suitable for containing inside it an initial product which is transformed into a beverage by the injection of a fluid in the capsule in a dispensing machine. The container "C" may have a base wall and a side wall defining a cavity suitable for containing the initial product, the perimeter flange "P" extending from the side wall and being positioned around the cavity, on the opposite side relative to the base wall. The base wall and the side wall define a body of the container "C" from which extends the perimeter flange "P".

A covering element may be fixed to the perimeter flange "P" of the container "C" closing the cavity and the initial product contained therein, after the container "C" has been filled, for making the capsule.

In particular, the container "C" may be made of aluminium, paper, PLA (polylactic acid), bioplastic obtained from starch of corn, wheat, tapioca and/or potatoes (for example, Mater-Bi), or polyolefin. It is understood that the same material is used to make both the body and the perimeter flange "P" of the container "C". The initial product which the container "C" may contain, once filled and covered by the covering element, may be, on the other hand, for example, a food product which is soluble, freeze-dried, dehydrated, concentrated, percolatable, in powder form - for example coffee, or chocolate; alternatively, the initial preparation can be, for example, a food product in leaf form - for example tea.

The fluid is preferably water, hot and under pressure, which makes it possible to obtain a beverage, for example coffee, barley coffee, tea, herbal tea, or chocolate from the capsule which can be obtained from the container "C".

Structurally, the apparatus 100 comprises at least one supporting unit 10 and an operating unit 20.

The supporting unit 10 has a seat configured to receive a body of the container "C" by insertion therein and an annular edge portion 11, surrounding the seat, suitable for receiving and supporting the annular body "A" and the perimeter flange "P" of the container "C" in such a way that the annular body "A" is interposed in use between the annular edge portion 11 and the perimeter flange "P".

The base wall and the side wall of the container "C" define the body of the container "C".

In other words, the supporting unit 10 defines a housing inside of which the body of the container "C" is inserted, that is to say, its main body, whilst its perimeter flange "P" is supported by the annular portion 11.

Similarly, the annular portion 11 also supports the annular body "A" in such a way that during use of the apparatus 100, that is to say, during an operation for applying the annular body "A" to the perimeter flange "P", the annular body "A" rests in direct contact with the annular portion 11, whilst the perimeter flange "P" is positioned above the annular body "A" in direct contact with the latter, thus resting and also being supported by the annular portion 11.

The supporting unit 10 may also comprise an annular recess 12, surrounding the annular portion 11, suitable for at least partly housing an annular end bead "O" of the perimeter flange "P".

In other words, the supporting unit 10 has a shaped profile which defiines a seat, in which the container body "C" can be inserted, around which the annular portion 11 extends circumferentially on which the annular body "A" and the perimeter flange "P" of the container "C" will rest, which is in turn completely surrounded by the annular recess 12 which, on the other hand, is suitable for housing the annular bead "O" representing the outermost portion (that is, the outer edge) of the perimeter flange "P".

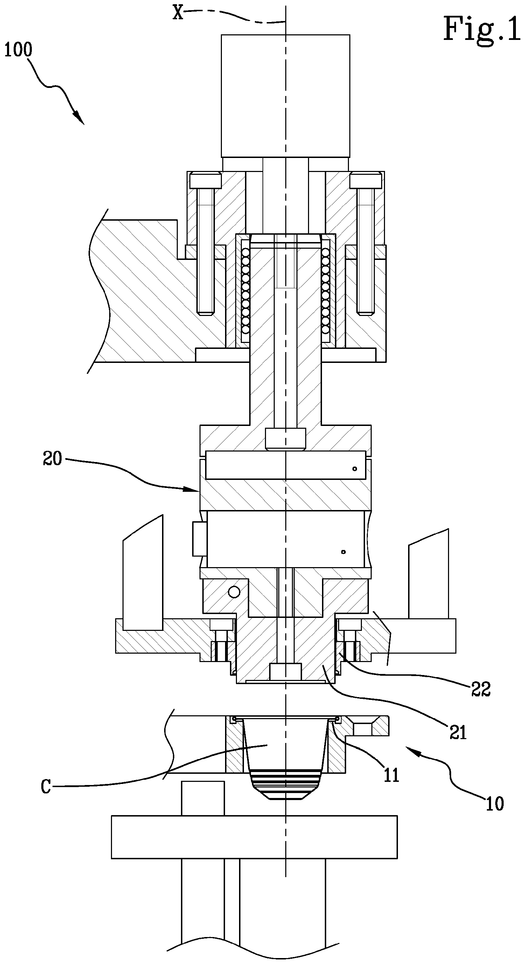

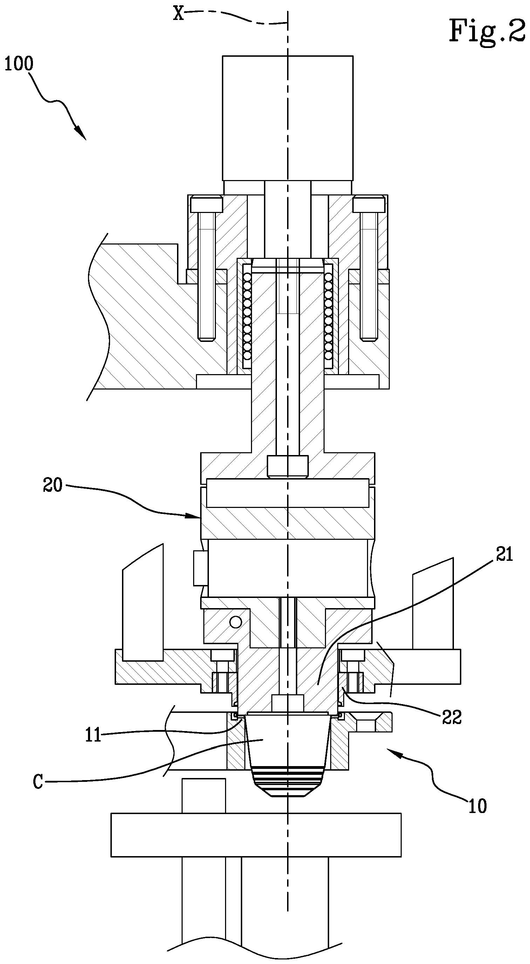

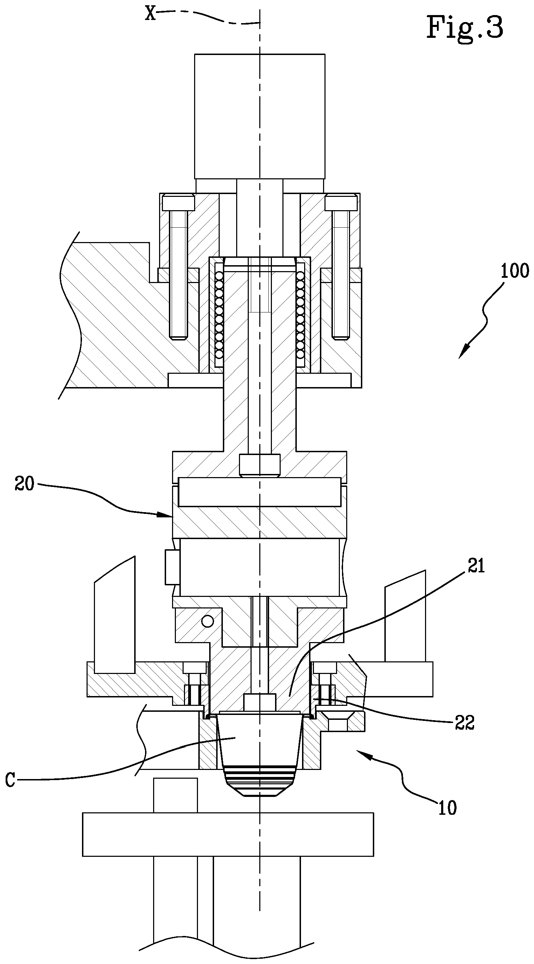

The operating unit 20 comprises, on the other hand, a heating device 21 configured to apply heat to the perimeter flange "P" of the container "C" in such a way as to fix the annular body "A" to the perimeter flange "P". More specifically, the supporting unit 10 and the heating device 21 are movable relative to each other along an axis of movement "X" between a spaced position, shown in Figure 1, in which the heating device 21 is inactive, and an activation position, shown for example in Figures 2 and 3, wherein the heating device 21 is active and is positioned in contact with the perimeter flange "P" for heating the annular body "A" through the perimeter flange "P".

In other words, the heating device 21 is activated to generate heat which is transferred by conduction to the annular body "A" when the heating device 21 is brought into contact with the perimeter flange "P" of the container "C" which is interposed between the two.

The heating device 21 may be brought into direct contact with the perimeter flange "P" of the container "C".

However, it should be noted that in general, the activation position is simply the position in which the heating device 21 finds itself in a condition such that it can perform an efficient transfer of heat to the annular body "A" by means of the perimeter flange "P".

In this regard, the transfer of heat to the annular body "A" may also occur by convection and/or irradiation and not only by direct contact.

In this context, in the activation position the heating device 21 might be simply facing the perimeter flange "P" and in contact with it by means of a fluid (ideally air) which mediates the transfer of heat from the heating device 21 to the perimeter flange "P".

In this way, the heating device 21 is never in direct contact with the annular body "A", eliminating the risk of damage or deterioration.

For this reason, in the activation position, whether the heating device 21 is in direct contact with the perimeter flange "P", or facing it and in contact with it by means of the fluid, it is active and is configured to heat the annular body "A" through the perimeter flange "P".

More specifically, the annular body "A" comprises at least one joining layer, made preferably of an adhesive material which can be heat-activated, which, in use, is interposed between the annular body "A" and the flange. In general, the joining layer may be made, for example, of a material such as polythene, or a polyolefin, or a bioplastic obtained from starch of corn, wheat, tapioca and/or potato (for example, Mater-Bi), polylactic acid (PLA) which, when it is heated using the heating device 21, becomes sticky and stably joins the annular body "A" to the perimeter flange "P".

According to a possible embodiment, the annular body "A" comprises a layer of heat-activatable adhesive material and a cellulose-based layer.

In this context, the heating device 21 is configured to apply a quantity of heat sufficient to activate the adhesive material through the perimeter flange "P", in this way allowing the ring to be fixed to the perimeter flange "P". The annular body "A" may also comprise a layered structure made by placing two or more cellulose-based layers alternated with joining layers. In other words, there is a layer of adhesive material interposed between each pair of cellulose-based layers and a further adhesive layer which will allow the coupling of the annular body "A" to the container "C".

In this context, the heating device 21 is configured to apply a quantity of heat sufficient to activate each layer of adhesive material through the perimeter flange "P", thus allowing the ring to be fixed to the perimeter flange "P" and at the same time seal together the cellulose-based layers defining a monolithic annular body "A".

Alternatively, again if the annular body "A" is formed by a plurality of cellulose-based layers, the apparatus 100 may comprise a dedicated assembling station in which the various layers making up the annular body "A" are sealed together.

Operatively, the assembling station may be upstream of the application of the annular body "A" to the container "C".

In other words, the assembling station is set up in such a way as to be able to process the annular body "A" before the latter is applied to the container "C".

More in detail, the assembling station comprises an ultrasound emitter configured to engage the annular body "A" and apply ultrasound to the layers composing it to make them vibrate.

This emitter can therefore be movable between a position in which it comes into contact or substantially into contact with at least one of the cellulose-based layers composing the annular body "A" and a position in which it is spaced from the latter.

In use, the vibration generated by the ultrasound causes the heating of the adhesive layers interposed between the cellulose-based layers, activating the adhesive material, allowing them to be stably welded together.

The presence of the assembling station improves the overall quality of the finished product which can be achieved since the pre-processing of the annular body "A", that is, the production of the finished annular body "A" upstream of its application, means that in the subsequent production steps it is only necessary to apply a sufficient quantity of heat to form the coupling with the container "C".

Consequently, the amount of heat transferred to the container "C" during application of the annular body "A" is reduced, consequently reducing the thermal stress to which it is subjected and also the risk of accidental damage to it.

It should be noted that the making and completion of any processing procedure on the annular body "A" using the above-mentioned assembling station (that is to say, a station configured to operate by means of an ultrasound emitter for sealing together the various layers which make up the annular body "A") is particularly advantageous irrespective of the specific method of subsequent application of the annular body to the container "C" and of the structural details of the apparatus proposed for performing this procedure.

Preferably, the heating device 21 has a cylindrical shape and comprises at least one heating element, such as, for example, at least one electrical resistance or at least one ultrasound device, applied at a perimeter portion of a base surface of the heating device 21 configured to engage in direct contact with, or not, the perimeter flange "P" when the device is in the activation position.

For this reason, the heating device 21 comprises at least one heating element, which defines an active heating portion which extends along a circular crown which ideally has the same dimensions as the perimeter flange "P" and is configured to enter into direct contact with the perimeter flange "P" in such a way as to transfer heat by thermal conduction (or convection and/or irradiation as indicated above) when the operating unit 20 is in the activation position.

More specifically, the active portion can completely follow the profile of the perimeter flange "P", or have a plurality of separate and distinct heating points positioned to form a shape which substantially follows the profile of the perimeter flange "P".

Preferably, the active portion of the heating device may have a respective temperature T21 which may be between 210° and 350°.

Moreover, if the heating device 21 is in direct contact with the perimeter flange "P", the pressure of this contact may be in a range of between 5 bar and 7.5 bar, preferably 6.5 bar, applied with a pneumatic cylinder with a non-through rod of diameter 50 mm.

The time of this heating to the temperature T21 by the heating device 21 may be between 450 msec and 1.5 seconds.

Preferably, in particular the apparatus 100 is configured to process containers "C" made of aluminium, the operating unit 20 further comprises a forming device 22 which is movable along the axis of movement "X" between a far position, shown for example in Figure 1, and an engaging position, shown in Figures 2 and 3, wherein the forming device 22 engages and deforms the annular bead "O" of the perimeter flange 12 pushing it in the annular recess "P".

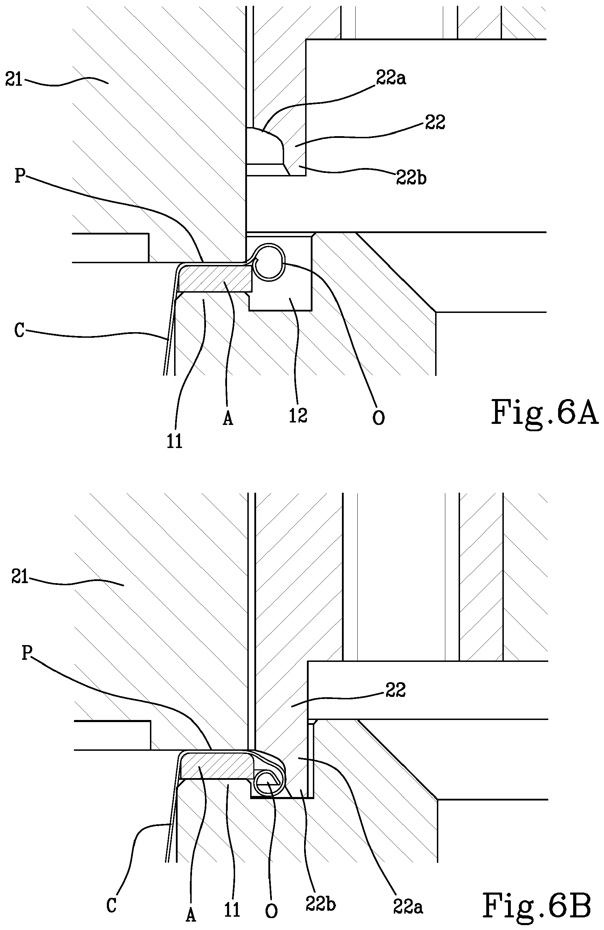

Operatively, the forming device 22 is therefore configured to engage and mechanically deform the annular bead "O" in such a way as to suitably shape it according to the manufacturing requirements and the specific shape to be assumed by the edge of the container "C", as shown in more detail in Figures 6A and 6B.

Preferably, the forming device 22 is configured to deform the annular bead "O" in such a way as to fold it at least partly around the annular body "A".

In that way, the annular bead "O" contributes to correctly retaining the annular body "A", preventing it from becoming detached from the container "C".

It should also be noted that, in this way, the annular bead "O" defines a recess in which the entire annular body "A" may be housed.

This may allow during dispensing, when the capsule obtained from the container "C" is used in the dispensing machine, to avoid friction between the annular body "A" and the ejection guides of the dispensing machine, thereby allowing a reduction in the percentage of defects due to the suspension in the machine and therefore guaranteeing correct releasing at the end of dispensing.

It should be noted that if it is the annular bead "O" to at least partly retain the annular body "A", it may not be necessary to provide any layers of adhesive substances in order to constrain the latter to the perimeter flange "P", since the coupling between the two may be of the purely mechanical type. Alternatively, the retaining and the coupling of the annular body "A" to the container "C" may be performed only by applying adhesive substances. However, advantageously, the retaining and coupling of the annular body "A" to the container "C" can be achieved by a combination between the mechanical coupling and the coupling by heating adhesive substances, wherein the use of adhesive substances is used in combination with a deformation of the annular bead "O" of the container such as to assist the retaining of the annular body "A".

In fact, since the annular bead "O" contributes to correctly retaining the annular body "A", the fastening of the annular body "A" to the perimeter flange "P" is reinforced during dispensing. In other words, this reinforces the fact that the annular body "A" cannot accidentally detach itself from the perimeter flange "P" when, during dispensing, liquid is injected under pressure into the capsule obtained from the container "C".

In the operating unit 20, it should be noted that the heating device 21 is housed in the forming device 22, that is to say, the forming device 22 is fitted on the heating device 21, it is positioned around it and is movable along the same axis of movement X along which the heating device 21 is movable. The operating unit 20 and the supporting unit 10 define in this way an operating station wherein both the heating and the mechanical deformation of the annular bead "O" occurs.

In fact, the heating device 21 and the forming device 22 are coaxial with each other relative to the same axis of movement X.

According to an aspect of the invention, the forming device 22 has a thrust surface suitable for engaging with the annular bead "O". The thrust surface is a surface located at the end of the forming device 22.

According to an embodiment, not illustrated, the thrust surface has a flat shape.

In use, the thrust surface is completely superposed along the axis of movement "X" on the annular bead "O" in such a way as to engage it completely when the forming device 22 is moved to the engaging position. At the same time, the annular recess 12 has a lateral extension substantially equal to that of only the annular bead "O", in such a way as to be able to house it completely when the latter is deformed by the forming device 22. More specifically, when the forming device 22 is in the engaging position and the deformation has been completed, the annular bead "O" is completely housed inside the annular recess 12, preferably housed to size, whilst the thrust surface is still superposed on and in contact with the annular bead "O" relative to the axis of movement "X".

This shape, with flat thrust surface, is particularly compact and allows the overall dimensions of the supporting unit 10 to be reduced.

According to an alternative embodiment, shown in detail in Figures 6A and 6B, the forming device 22 has a thrust surface suitable for engaging with the annular bead "O", which is shaped to define an inner circular crown 22a and an outer circular crown 22b.

In use, the inner circular crown 22a is completely superposed along the axis of movement "X" on the annular bead "O", whilst the outer circular crown 22b is only partly superposed on an outer edge of the annular bead "O". The outer circular crown 22b protrudes relative to the inner circular crown 22a along the axis of movement "X".

In this way, during the translation of the forming device 22 from the far position to the engaging position, the outer circular crown 22b engages firstly the annular bead "O" at its outer edge starting its deformation and only then the inner circular crown 22a comes into contact with the entire annular bead "O" to push it along the axis of movement "X", completing the deformation.

This specific shape therefore makes it possible to accompany the deformation of the annular bead "O", splitting the process into a series of successive steps which reduce the risk of damaging the annular bead "O", since the mechanical stress to which it is subjected is gradually applied and the final thrust is applied only after preforming the annular bead "O" by the outer circular crown 22b.

Moreover, the inner circular crown 22a, the outer circular crown 22b and their connecting surface can be specially shaped in such a way as to give the profile of the annular bead "O" a specific shape, once deformed, thus allowing any aesthetic or functional requirements to be met (for example, compatible with the components of certain machines with which the container "C" is to be used).

At the same time, the annular recess 12 has a lateral extension greater than that of only the annular bead "O", in such a way as to at least partly house also the outer circular crown 22b of the forming device 22 when the latter is moved to the engaging position.

In particular, as shown in Figure 6B, when the forming device 22 is in the engaging position and the deformation of the annular bead "O" has just been completed, the outer circular crown 22b is completely housed inside the annular recess 12 and is positioned alongside the outside of the deformed annular bead "O", whilst the inner circular crown 22a is still superposed on and in contact with the annular bead "O" relative to the axis of movement "X".

It should be noted that during deformation of the annular bead "O", a free edge of the annular bead "O" is brought into contact with a bottom wall of the annular recess 12 and thanks to the shape of the deformed annular bead "O", in which the free edge is moved towards the base wall of the container "C", a recess is formed in which the annular body "A" is entirely housed. Thanks to this shape, in addition to retaining the annular body "A", the defectiveness associated with failure to release the capsule obtained from the container "C" at the end of dispensing can be reduced. According to a possible embodiment, the forming device 22 has a tubular shape inside of which the heating device 21 is slidably inserted, which in turn has a cylindrical shape or in any case shaped to match the inner wall of the forming device 22.

Operatively, the forming device 22 can slide along the heating device 21 (that is to say, the two devices 21, 22 are movable relative to each other), in such a way that the forming device 22 can be moved from the far position to the engaging position when the heating device 21 is kept in the activation position.

For this reason, it is possible to deform the annular bead "O" whilst the heating of the annular body "A" is still being performed, with the further advantage that the contact of the heating device 21 with the perimeter flange "P" eliminates the risk of accidental movements of the container "C" during mechanical deformation of the annular bead "O".

This feature therefore guarantees the production of a product with a high quality both structurally and in terms of appearance.

For this purpose, according to a first possible embodiment, the operating unit 20 comprises a movement device, not illustrated, configured to move the heating device 21 and the forming device 22 in a mutually integral manner between the spaced position and the activation position, and just the forming device 22 between the far position and the engaging position when the heating device 21 is in the activation position.

In other words, when the heating device 21 and the forming device 22 are respectively in the spaced position and far position from the supporting unit 10, the forming device 22 is retracted and further spaced from the supporting unit 10 with respect to the heating device 21.

For this reason, in use, the movement device determines the mutual moving towards each other between the supporting unit 10 and both the heating device 21 and forming device 22 simultaneously, until the heating device 21 is in contact with the perimeter flange "P" of the container "C".

At this point, the further advancing of the heating device 21 is prevented by the overall dimensions of the supporting unit 10 and the movement device acts solely on the forming device 22, making it slide along the heating device 21, in such a way as to move it progressively towards the supporting unit 10 until engaging and deforming the annular bead "O" of the container "C".

In this context, the operating unit 20 further comprises elastic means interposed between the heating device 21 and the forming device 22, which are configured to mediate a backwards/forwards movement between the latter during the movement of the forming device 22.

More specifically, once the heating device 21 has reached the activation position, the gradual movement of the forming device 22 is absorbed by the elastic means causing a corresponding deformation which is subsequently recovered when the forming device 22 is returned to the far position.

In this way, during the entire procedure for deforming the annular bead "O", the pushing action exerted by the elastic means guarantees the correct maintaining of the activation position of the heating device 21.

According to a different embodiment, the heating device 21 and the forming device 22 can be moved independently from each other by respective driving devices, not illustrated.

According to this aspect, the operating unit 20 specifically comprises a first driving device, configured to move the heating device 21 between the spaced position and the activation position, and a second driving device configured to move the forming device 22 between the far position and the engaging position.

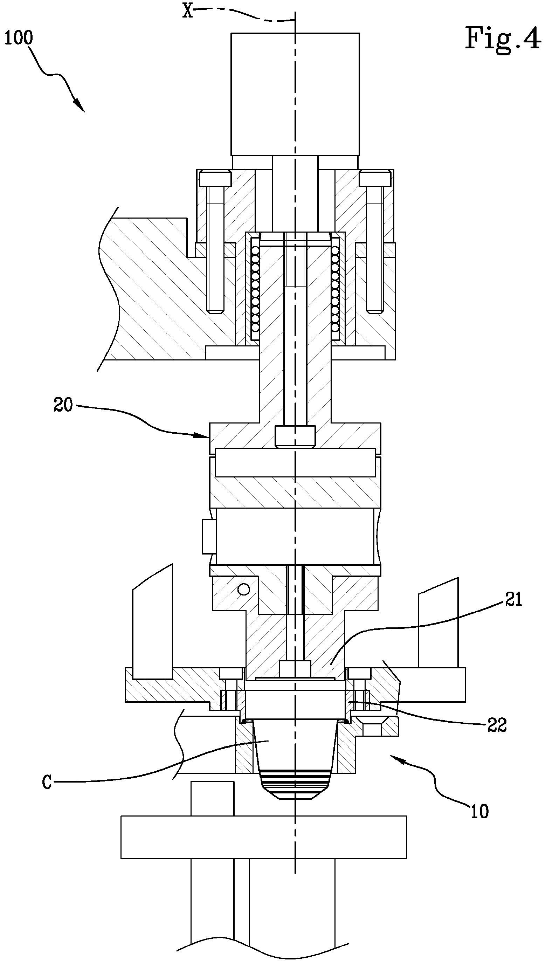

More specifically, the forming device 22 is configured to be kept in the engaging position, when the heating device 21 is moved from the activation position to the spaced position, as illustrated by way of example in Figure 4.

In other words, the second driving device operates in such a way as to return the forming device 22 from the engaged position to the far position only after the first driving device has returned the heating device 21 to the spaced position.

In this way, it is possible to guarantee the correct detachment of the heating device 21 from the perimeter flange "P" even if the heat transferred has been such as to cause a partial melting of a heat seal lacquer which generally coats an outer surface of the aluminium capsules, causing the consequent adhesion with the heating device 21, since during its movement from the activation position to the spaced position the container "C" is retained in its coupling position with the supporting device 10 thanks to the action of the forming device 22 which is still engaging the perimeter bead. With regard to the heat seal lacquer, it may also personalise the aluminium if it is coloured and may facilitate the adhesion of the adhesive to aluminium of the body. In fact, the lacquer may be joined, for example, to polythene, or to polylactic acid, when at least the latter are heated (optionally, the lacquer may also be heated), to allow the annular body "A" to be joined to the heat sealing lacquer of the aluminium.

Preferably, the lacquer is selected in such a way as to be compatible with the joining layer, that is, with the adhesive, thus guaranteeing a permanent seal or an adequate adhesion so as not to detach the annular body "A" from the perimeter flange "P" even during dispensing.

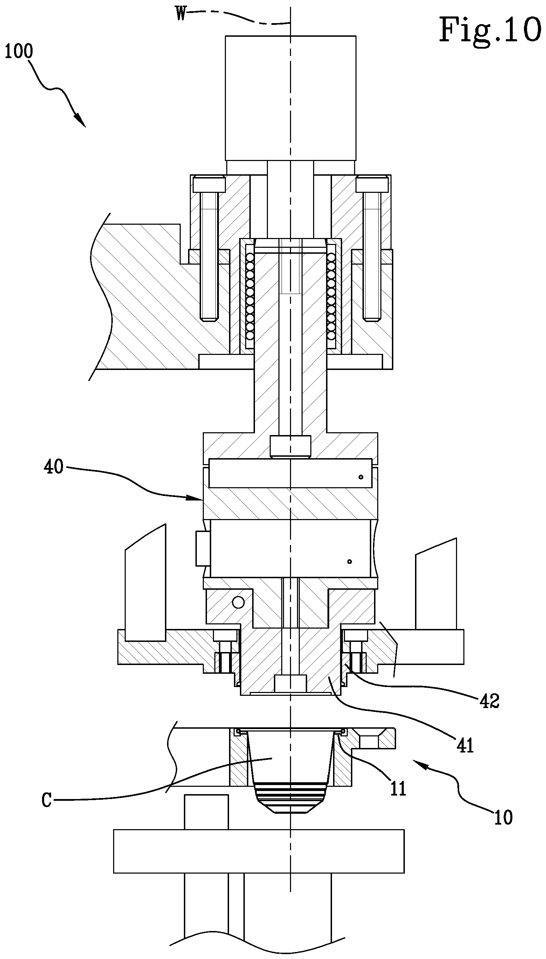

According to a possible alternative embodiment, illustrated in Figure 10, the forming device 22 is not coupled to the heating device 21 in the operating unit 20, but is located upstream or downstream of the latter along a path for processing the container "C".

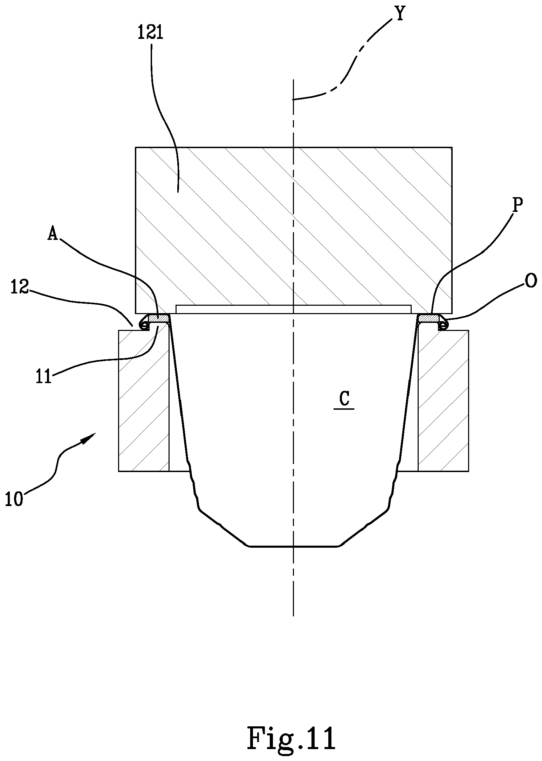

In other words, the apparatus comprises a heating device 121, a version of which is shown in Figure 11, and a forming device 42, which define respective independent processing stations located in succession along the path for processing the container "C".

The heating device 121 may be movable along an axis of movement "Y".

In this context, the forming device 42 is movable along a respective axis of movement "W", which is preferably parallel to the axis of movement "Y", between the above-mentioned far position and engaging position wherein the forming device 42 engages and deforms the annular bead "O", pushing it into the annular recess 12.

It should be noted that the forming device 42 is configured to substantially replace both the structure and the functions provided for the forming device 22 in the embodiment described above.

Consequently, the supporting unit 10 is movable along the processing path which faces both the station defined by the heating device 121 and the station defined by the forming device 42 in such a way as to allow them to operate on the container "C".

Preferably, the apparatus 100 further comprises a abutment device 41 positioned coaxially inside the forming device 42.

The apparatus 100 comprises a processing unit 40 comprising the abutment device 41 and the forming device 42.

In other words, the abutment device 41 is housed in the forming device 42, that is to say, the forming device 42 is fitted on the abutment device 41, in the same way as in the above-mentioned embodiment the forming device 22 was fitted on the heating device 21.

More in detail, the abutment device 41 is slidable along the axis of movement W to come into contact with the perimeter flange "P" at least during the deformation of the annular bead "O", as already illustrated in more detail in Figures 6A and 6B with reference to the heating device 21 and the forming device 22, between the above-mentioned spaced position and activation position.

It should be noted that in the embodiment described here in detail the abutment device 41 is coupled in such a way as to substantially replace both the structure and the functions provided for the heating device 21 in the embodiment described previously, that is to say, the one in which the heating device 21 was housed in the forming device 22, that is to say, the forming device 22 was fitted on the heating device 21.

It should be noted in Figure 10 that both the abutment device 41 and the forming device 42 are in the above-mentioned spaced and far positions and the annular bead "O" has still not been deformed.

For this reason, any consideration previously presented specifically regarding the relative movement between the heating device 21 and the forming device 22 and the means which allow this movement are, in this context, also replicated and applied to the forming device 42 and to the abutment device 41.

Operatively, the abutment device 41 in particular allows the container "C" to be held correctly in position during deformation of the annular bead "O". Moreover, the abutment device 41 may comprise a heat-adjustable engagement portion (not illustrated) designed to engage with the perimeter flange "P" to adjust the temperature at least during deformation of the annular bead "O".

This feature allows the abutment device 41 to finely adjust the temperature of the perimeter flange "P", thus allowing the deformation of the annular bead "O" to be assisted to make it more malleable when located upstream of the heating station 121 or to stabilise the annular body "A" cooling it when located downstream of the heating device 121.

It is therefore valid, as stated above, that the abutment device 41 is cylindrical in shape and that the forming device 42 has a tubular shape which houses the abutment device 41.

In fact, the forming device 42 is slidable along the abutment device 41 in such a way that said forming device 42 can be moved from the far position to the engaging position when the abutment device 41 is kept in the activation position.

As regards, on the other hand, the relative movement between the abutment device 41 and the forming device 42, similarly to the above, there may be a displacement device, similar to the movement device described above, configured to move the abutment device 41 and the forming device 42 in a mutually integral manner between the spaced position and the activation position, and the forming device 42 between the spaced position and the engaging position when the abutment device 41 is in the activation position, and elastic means interposed between the abutment device 41 and the forming device 42 configured to mediate a backwards/forwards movement between the abutment device 41 and the forming device 42 during the movement of the forming device 42.

It should be noted that the forming device 42 is configured to be kept in the engaging position, when the abutment device 41 is moved from the activation position to the spaced position.

Alternatively, the processing unit 40 may comprise a first actuation device, similar to the first driving device described above, configured to move the abutment device 41 between the spaced position and the activation position and a second actuation device, similar to the second driving device described above, configured to move the forming device 42 between the far position and the engaging position, the first actuation device and the second actuation device being mutually independent.

With regard to the heating device 121, it may have a cylindrical shape and may comprise at least one heating element, such as, for example, at least one electrical resistance or at least one ultrasound device, applied at a perimeter portion of a base surface of the heating device 121 configured to engage in direct contact with, or not, the perimeter flange "P" when the device is in the activation position.

The above applies to the structure and function of the heating device 121, which has both the structure and the functions provided for the heating device 21 in the embodiment described above, that is, the one in which the heating device 21 was housed in the forming device 22, and was movable between the above-mentioned spaced position and activation position.

However, advantageously, when the heating device 121 is positioned downstream of the forming unit 42, as shown in Figure 11, in which the annular bead "O" has already been folded in the annular recess 12, the heating device 121 may differ from the heating device 21 since it may have at least one heating element extending along a circular crown with dimensions greater than the perimeter flange "P".

In this way, the heating device 121 may engage with the entire perimeter flange "P" when the heating device 121 is in the activation position and this makes it possible to increase the surface of the circular crown configured to make contact with and heat the annular body "A" through the perimeter flange "P".

By increasing the contact surface, a transmission of heat per unit time may be increased by the heating device 121, which guarantees an improved heat transmission efficiency and allows a smaller contact time, to the benefit of a shorter cycle time of the apparatus and therefore a production efficiency which can be increased. Moreover, the heating device 121 may be kept at an optimum temperature T121 such as to prevent damage to the coating layers of the perimeter flange "P".

Moreover, if the abutment device 41 is heat adjusted to a respective temperature T41 of between 60 and 120°, the heating device 121 may have an active portion at a respective temperature T121 of between 210° and 350°.

In this case, the heating time at the temperature T121 is from 100 ms to 350 ms.

In fact, the heat which the annular body "A" receives from the abutment device 41 is maintained thanks to the thermal inertia of the annular body "A" during the movement of the supporting device 10 which transfers the container "C" from the forming station to the heating station. For this reason, the heating device 121 can rapidly heat the annular body "A" since it receives the latter when it is already hot, at a temperature which is just less than the temperature T41 of the abutment device 41.

Optionally, the heating device 121 may be duplicated, that is to say, there can be a further heating device, equal to that described above, in a respective independent processing station, also located along the processing path of the container "C", downstream of the heating device 121. The further heating device also faces the processing path and can also have at least one heating element which extends along a circular crown with dimensions greater than the perimeter flange "P".

The further heating device, not illustrated, can advantageously stabilise the heating of the annular body "A" at a further operating temperature T121' which may also be equal, or different, to the operating temperature T121 of the heating device 121, since the further heating device receives the annular body "A" at a temperature slightly less than the temperature T121 of the heating device 121.

In fact, as mentioned above, the heat which the annular body "A" receives from the heating device 121 is maintained during the movement of the container "C" from the heating device 121 to the further heating device by the supporting device 10.

It should be noted that, in the presence of the further heating device, the abutment device 41 may also be without temperature regulation, and that is to say, it can work at ambient temperature.

The further heating device may have a portion active at a respective temperature T121' of between 210° and 300°.

In this case, the heating time at the temperature T121' by the further heating device may be from 100 ms to 350 ms.

For example, the heating time at the temperature T121 may be equal to 300 ms whilst the heating time at the temperature T121' by the further heating device may be equal to 150 ms since the annular body "A" has already been heated by the heating device 121.

If, on the other hand, the heating device 121 is upstream of the processing unit 40, it differs from that shown in Figure 11 in terms of the diameter, which must have a heating element which extends along a circular crown of the same dimensions as the perimeter flange "P", having to avoid deformation of the annular bead "O".

In this case, the heating device located upstream of the forming device may be shaped like the heating device 21 described in association with the operating unit 20, and each consideration previously presented specifically relative to the shape and the relative movement between the heating device 21 and the supporting unit 10 are in this context replicated and applied also to the heating device located in a processing station independent of the forming device 42 and upstream of the latter.

Generally speaking, that is to say, irrespective of the specific embodiment, according to which the heating device 21, or 121, and the forming device 22, or 42, and the abutment device 41 are made, the apparatus 100 may further comprise an expulsion unit 30 associated with or associable with the supporting unit 10 in such a way as to be positioned below it, that is, facing the zone for application of the annular body "A".

More specifically, according to a first possible embodiment, the expulsion unit 30 is stably coupled to the supporting unit 10 and moves integrally with it along the processing path and then enters into action only at the end of the heating and forming operations, that is to say, when the two are located downstream of both the position of the heating device 21 and the position in which the forming device 22 is located.

Alternatively, the expulsion unit 30 may be located in a fixed position situated along the processing path downstream both of the position of the heating device 21 and of the position of the forming device 22.

In this situation, the expulsion unit 30 enters into action only when the supporting unit 10, sliding along the processing path, is located, in particular superposed, with this expulsion unit 30 and defines an expulsion apparatus of the container "C" from a seat in which it is inserted.

In detail, the expulsion unit 30 comprises or is connectable to a source of pneumatic pressure configured to generate a flow of compressed air "S" suitable for expelling the container "C" from the supporting unit 10.

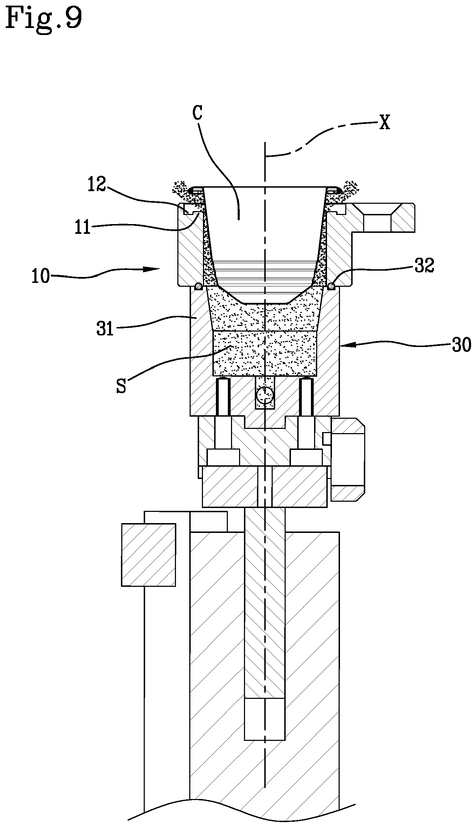

For this reason, the removal of the container "C" from the supporting unit 10 at the end of the application of the annular body "A" is performed by directing against the container "C" a flow of compressed air "S" which strikes it from below until lifting it, as shown in Figure 9, and expelling it above the supporting unit 10.

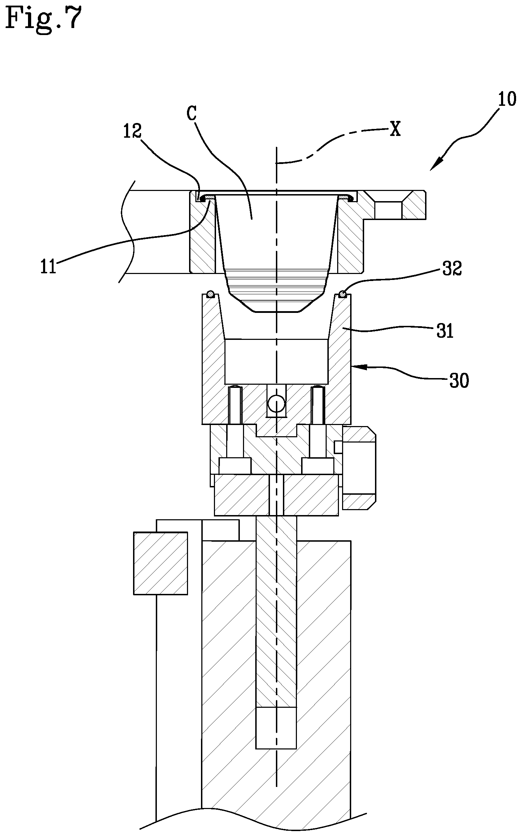

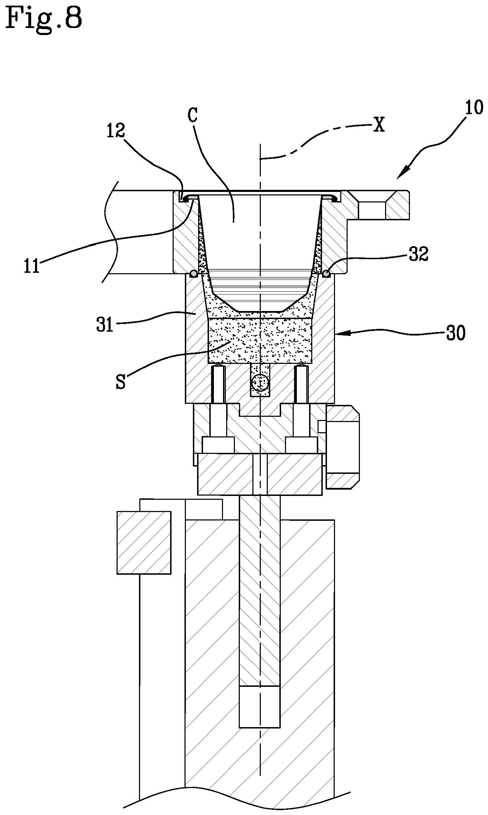

Structurally, the expulsion unit 30 comprises a cup-shaped body 31 movable along the axis of movement "X" between a detached position, shown in Figure 7, and a sealing position, shown for example in Figures 8 and 9, in which the cup-shaped body 31 engages a lower surface of the supporting unit 10 preferably coinciding with a lower surface of the annular portion 11, forming with it a fluid-tight coupling.

More specifically, the cup-shaped body 31 may comprise an annular gasket 32 positioned at a relative upper edge designed to interpose in the sealing position between the cup-shaped body 31 and the annular portion 11, forming in this way the above-mentioned fluid-tight coupling.

This avoids costly and inefficient dispersion of the flow of compressed air "S" which is correctly and completely directed towards the container "C".

Advantageously, the invention achieves the preset aims overcoming the drawbacks of the prior art by providing the user with an apparatus 100 for applying an annular body "A" to the perimeter flange "P" of a container "C" which is structurally simple and able to heat the annular body "A" without damaging it.

The invention also relates to a method for applying an annular body "A", preferably cellulose-based, to a perimeter flange "P" of a container "C", preferably in a production process for making a capsule for beverages.

More specifically, the method described here can be performed in particular using an apparatus 100 having one or more of the technical features described above.

The method is performed by preparing a supporting unit 10 which has a through seat and an annular edge portion 11 surrounding the seat.

The annular body "A" and also the perimeter flange "P" of the container "C" are rested on the annular portion 11, in such a way that the annular body "A" is interposed between the annular portion 11 and the perimeter flange "P".

In other words, the annular body "A" is first rested on the annular portion 11 and only then is the container "C" inserted into the seat, positioning its perimeter flange "P" above the annular body "A" and in direct contact with it.

Heat is then applied to the perimeter flange "P" in such a way as to heat the annular body "A" through the perimeter flange "P".

In other words, according to this method, the heat is not applied directly to the annular body "A", but to a further element, specifically the perimeter flange "P", which performs the function of the intermediate element and transfers the heat received to the annular body "A", thus preventing heat from being applied directly to it.

In this way, the annular body "A" does not directly interface with the heat source (that is, the heating device 21, or 121, if the procedure is performed using an apparatus according to the invention) and does not risk being damaged or deteriorated in terms of its chemical/physical properties.

In more detail, the application of heat to the perimeter flange "P" is performed by bringing a heating device 21, or 121, in contact with the perimeter flange "P".

The heating device 21, or 121, is then activated in such a way as to generate heat which is transferred to the annular body "A" by means of the perimeter flange "P".

The method may further comprise a deformation step wherein an annular end bead "O" of the perimeter flange "P" is deformed by pushing it into an annular recess 12 of the supporting unit 10 positioned outside the annular portion 11.

Moreover, the step of applying heat to the perimeter flange "P" and the step of deforming the annular bead "O" may be performed in a single operating station or in respective independent processing stations located in succession along a processing path of the container "C".

More specifically, the deformation of the annular bead "O" can start after the start of the step for applying heat to the perimeter flange "P".

The step of deforming the annular bead "O" can also conclude before the end of the step of applying heat to the perimeter flange "P".

For example, the deformation step could be performed in a station located upstream of the station where the heat application step is performed. According to another aspect of the invention, the step of deforming the annular bead "O" concludes, on the other hand, after the end of the step of applying heat to the perimeter flange "P".

For example, the heating process might be performed in a station located upstream of the station where the deformation procedure is performed. The method may also comprise a step of expelling or in general uncoupling the container "C" from the supporting unit 10, which is performed at the end of the heat application procedure.

In particular, the expulsion may be performed by generating a flow of compressed air "S" which is applied to the container "C" at a face of the supporting unit 10 opposite to that on whose annular portion 11 the annular body "A" and the perimeter flange "P" are resting.

Advantageously, the invention achieves the preset aims overcoming the drawbacks of the prior art by providing the user with a method for applying an annular body "A" to the perimeter flange "P" of a container which is particularly simple and efficient, which prevents damage to and deterioration of the annular body "A" during its application and guarantees a reinforced fastening of the annular body "A" to the perimeter flange "P" by heating of the annular body "A" and the mechanical deformation annular bead "O".

## Claims

1. An apparatus for applying an annular cellulose-based body (A) to a perimeter flange (P) of a container (C), comprising:
- a supporting unit (10) having a seat, configured to receive a body of said container (C) by insertion therein, and an annular edge portion (11) surrounding said seat and suitable for receiving and supporting the annular body (A) and said perimeter flange (P) in such a way that the annular body (A) is interposed in use between the annular edge portion (11) and the perimeter flange (P);
- a heating device (21; 121), said supporting unit (10) and said heating device (21; 121) being reciprocally movable along an axis of movement (X; W) between a spaced position in which the heating device (21; 121) is inactive and an activation position wherein the heating device (21; 121) is active and is positioned in contact with the perimeter flange (P) in such a way as to heat the annular body (A) through said perimeter flange (P); wherein
- the supporting unit (10) comprises an annular recess (12), surrounding the annular portion (11), designed to at least partly house an annular end bead (O) of the perimeter flange (P); the apparatus comprising
- a forming device (22; 42), which is movable along a respective axis of movement (X; Y) between a far position and an engaging position wherein said forming device (22; 42) engages the annular bead (O), **characterized in that** the forming device (22; 42) in the engaging position deforms the annular bead (O) pushing said annular bead (O) into the annular recess (12).

2. The apparatus according to claim 1, wherein the annular body (A) comprises a layered structure comprising a layer of heat-activatable adhesive material and a cellulose-based layer, said heating device (21) being configured to activate the adhesive material through the perimeter flange (P) so as to fix the ring to the perimeter flange (P).

3. The apparatus according to claim 1 or 2, wherein the heating device (21) has a cylindrical shape and comprises at least one heating element, preferably at least one electric resistor or at least one ultrasound device, applied in a perimeter portion of a base surface of the heating device (21), said base surface being configured to engage with the perimeter flange (P) at the annular portion (11) when the heating device (21) is in the activation position.

4. The apparatus according to any one of the preceding claims, wherein the apparatus comprises an operating unit (20) comprising the heating device (21) and the forming device (22), wherein the heating device (21) is housed in the forming device (22), the forming device (22) being movable along the same axis of movement (X) along which the heating device (21) is movable and optionally wherein the heating device (21) is cylindrical in shape and the forming device (22) is tubular in shape and internally houses said heating device (21).

5. The apparatus according to claim 4, wherein the forming device (22) is slidable along the heating device (21) in such a way that said forming device (22) can be moved from the far position to the engaging position when the heating device (21) is kept in the activation position.

6. The apparatus according to claim 4, or 5, wherein the operating unit (20) comprises:
- a movement device configured to move in a mutually integral manner the heating device (21) and the forming device (22) between the spaced position and the activation position, and the forming device (22) between the far position and the engaging position when the heating device (21) is in the activation position;
- elastic means interposed between the heating device (21) and the forming device (22) configured to mediate a backwards/forwards movement between the heating device (21) and the forming device (22) during the movement of the forming device (22), and optionally wherein the forming device (22) is configured to be kept in the engaging position, when the heating device (21) is moved from the activation position to the spaced position; or wherein the operating unit (20) comprises:
- a first driving device configured to move the heating device (21) between the spaced position and the activation position;
- a second driving device configured to move the forming device (22) between the far position and the engaging position;
said first driving device and the second driving device being mutually independent.

7. The apparatus according to any one of claims 1 to 3, wherein the forming device (42) is positioned upstream or downstream of the heating device (121), and is movable along a respective axis of movement (W) parallel to the axis of movement (Y) of the heating device (121), and optionally wherein the supporting unit (10) is movable along a processing path facing the heating device (121) and the forming device (42).

8. The apparatus according to claim 7, wherein the apparatus comprises a processing unit (40) comprising an abutment device (41) positioned coaxially inside the forming device (42) and slidable along said forming device (42) between a respective spaced position and a respective activation position to engage said perimeter flange (P) at least during deformation of the annular bead (O); and optionally wherein the abutment device (41) comprises a heat-adjustable engagement portion designed to engage the perimeter flange (P) for adjusting a temperature of said perimeter flange (P) at least during deformation of the annular bead (O).

9. The apparatus according to claim 8, wherein the abutment device (41) is cylindrical in shape and the forming device (42) has a tubular shape housing said abutment device (41) inside it.

10. The apparatus according to claim 8, or 9, wherein the forming device (42) is slidable along the abutment device (41) in such a way that said forming device (42) can be moved from the far position to the engaging position when the abutment device (41) is kept in the activation position.

11. The apparatus according to any of claims 8 to 10, wherein the processing unit (40) comprises:
- a displacement device configured to move in a mutually integral manner the abutment device (41) and the forming device (42) between the spaced position and the activation position, and the forming device (42) between the far position and the engaging position when the abutment device (41) is in the activation position;
- elastic means interposed between the abutment device (41) and the forming device (42) configured to mediate a backwards/forwards movement between the abutment device (41) and the forming device (42) during the movement of the forming device (42), and optionally wherein the forming device (42) is configured to be kept in the engaging position, when the abutment device (41) is moved from the activation position to the spaced position; or wherein the processing unit (40) comprises:
- a first actuation device configured to move the abutment device (41) between the spaced position and the activation position;
- a second actuation device configured to move the forming device (42) between the far position and the engaging position;
said first actuation device and second actuation device being mutually independent.

12. The apparatus according to any one of claims 7 to 11, wherein the heating device (121) is positioned downstream of the forming device (42) along the processing path and has at least one heating element extending along a circular crown with dimensions greater than the perimeter flange ("P").

13. The apparatus according to claim 12, and comprising a further heating device, positioned downstream of the heating device (121), the processing path facing in addition the further heating device; the further heating device having at least one heating element which extends along a circular crown with dimensions greater than the perimeter flange (P).

14. A method for applying an annular cellulose-based body (A) to a perimeter flange (P) of a container (C), comprising the following steps:
- preparing a supporting unit (10) having a through seat and an annular edge portion (11) surrounding said seat;
- positioning the annular body (A) and said perimeter flange (P) resting on the annular supporting edge portion (11) in such a way that the annular cellulose-based body (A) is interposed between the annular edge portion (11) and the perimeter flange (P);
- applying heat to the perimeter flange (P) in such a way as to heat the annular cellular-based body (A) through said perimeter flange (P); **characterised in that** the step of applying heat to the perimeter flange (P) is carried out by the following sub-steps:
- bringing a heating device (21; 121) into contact with the perimeter flange (P);
- activating the heating device (21; 121) in such a way as to heat the annular body (A) through said perimeter flange (P) and wherein the method further comprises
- deforming an annular end bead (O) of the perimeter flange (P), said deforming step being performed by pushing the annular end bead (O) into an annular recess (12) of the supporting unit (10) positioned outside the annular portion (11).

15. The method according to claim 14, wherein the step of deforming the annular bead (O) starts after the step of applying heat to the perimeter flange (P).

16. The method according to claim 14, or 15, wherein the step of deforming the annular bead (O) concludes before the end of the step of applying heat to the perimeter flange (P) or wherein the step of deforming the annular bead (O) is concluded after the end of the step of applying heat to the perimeter flange (P).

## Patentansprüche

1. Vorrichtung zum Anbringen eines ringförmigen cellulosebasierten Körpers (A) an einem Umfangsflansch (P) eines Behälters (C), umfassend:
- eine Trägereinheit (10), aufweisend einen Sitz, der dafür ausgelegt ist, durch Einsetzen einen Körper des Behälters (C) aufzunehmen, und einen ringförmigen Randabschnitt (11), der den Sitz umgibt und geeignet ist, den ringförmigen Körper (A) und den Umfangsflansch (P) derart aufzunehmen und zu tragen, dass der ringförmige Körper (A) im Gebrauch zwischen dem ringförmigen Randabschnitt (11) und dem Umfangsflansch (P) angeordnet ist;
- eine Heizvorrichtung (21; 121), wobei die Trägereinheit (10) und die Heizvorrichtung (21; 121) entlang einer Bewegungsachse (X; W) hin und her beweglich sind zwischen einer beabstandeten Stellung, in der die Heizvorrichtung (21; 121) inaktiv ist, und einer Aktivierungsstellung, in der die Heizvorrichtung (21; 121) aktiviert ist und derart in Berührung mit dem Umfangsflansch (P) angeordnet ist, dass die den ringförmigen Körper (A) durch den Umfangsflansch (P) erhitzt; wobei
- die Trägereinheit (10) eine ringförmige Aussparung (12) umfasst, die den ringförmigen Abschnitt (11) umgibt, und die dafür bestimmt ist, einen ringförmigen Endwulst (O) des Umfangsflanschs (P) zumindest teilweise aufzunehmen; wobei die Vorrichtung umfasst
- eine Formungsvorrichtung (22; 42), die entlang einer entsprechenden Bewegungsachse (X; Y) bewegbar ist zwischen einer abgerückten Stellung und einer Eingriffsstellung, in der die Formungsvorrichtung (22; 42) mit dem ringförmigen Wulst (O) in Eingriff gelangt, **dadurch gekennzeichnet, dass** die Formungsvorrichtung (22; 42) in der Eingriffsstellung den ringförmigen Wulst (O) verformt und den ringförmigen Wulst (O) in die ringförmige Aussparung (12) hineindrückt.

2. Vorrichtung nach Anspruch 1, wobei der ringförmige Körper (A) eine geschichtete Struktur aufweist, umfassend eine Schicht aus wärmeaktivierbarem Klebstoff und eine cellulosebasierte Schicht, wobei die Heizvorrichtung (21) dafür ausgelegt ist, den Klebstoff durch den Umfangsflansch (P) zu aktivieren, um den Ring an dem Umfangsflansch (P) zu befestigen.

3. Vorrichtung nach Anspruch 1 oder 2, wobei die Heizvorrichtung (21) zylinderförmig ist und zumindest ein Heizelement umfasst, vorzugsweise zumindest einen elektrischen Widerstand oder zumindest eine Ultraschallvorrichtung, das an einem Umfangsabschnitt einer Basisoberfläche der Heizvorrichtung (21) angebracht ist, wobei die Basisoberfläche dafür ausgelegt ist, mit dem Umfangsflansch (P) an dem ringförmigen Abschnitt (11) in Eingriff zu gelangen, wenn sich die Heizvorrichtung (21) in der Aktivierungsstellung befindet.

4. Vorrichtung nach einem der vorhergehenden Ansprüche, wobei die Vorrichtung eine Arbeitseinheit (20) umfasst, welche die Heizvorrichtung (21) und die Formungsvorrichtung (22) umfasst, wobei die Heizvorrichtung (21) in der Formungsvorrichtung (22) untergebracht ist, wobei die Formungsvorrichtung (22) entlang derselben Bewegungsachse (X) bewegbar ist, entlang derer die Heizvorrichtung (21) bewegbar ist und wobei optional die Heizvorrichtung (21) zylinderförmig ist und die Formungsvorrichtung (22) rohrförmig ist und in ihrem Inneren die Heizvorrichtung (21) aufnimmt.

5. Vorrichtung nach Anspruch 4, wobei die Formungsvorrichtung (22) entlang der Heizvorrichtung (21) derart gleitend verschiebbar ist, dass die Formungsvorrichtung (22) von der abgerückten Stellung in die Eingriffsstellung bewegt werden kann, wenn die Heizvorrichtung (21) in der Aktivierungsstellung gehalten wird.

6. Vorrichtung nach Anspruch 4, oder 5, wobei die Arbeitseinheit (20) umfasst:
- eine Bewegungsvorrichtung, die dafür ausgelegt ist, die Heizvorrichtung (21) und die Formungsvorrichtung (22) miteinander integral zwischen der beabstandeten Stellung und der Aktivierungsstellung zu bewegen, und die Formungsvorrichtung (22) zwischen der abgerückten Stellung und der Eingriffsstellung zu bewegen, wenn sich die Heizvorrichtung (21) in der Aktivierungsstellung befindet;
- elastische Mittel, die zwischen der Heizvorrichtung (21) und der Formungsvorrichtung (22) angeordnet sind, und die dafür ausgelegt sind, eine Rückwärts-/Vorwärtsbewegung zwischen der Heizvorrichtung (21) und der Formungsvorrichtung (22) während der Bewegung der Formungsvorrichtung (22) zu vermitteln, und wobei optional die Formungsvorrichtung (22) dafür ausgelegt ist, in der Eingriffsstellung gehalten zu werden, wenn die Heizvorrichtung (21) von der Aktivierungsstellung in die beabstandete Stellung bewegt wird; oder wobei die Arbeitseinheit (20) umfasst:
- eine erste Antriebsvorrichtung, die dafür ausgelegt ist, die Heizvorrichtung (21) zwischen der beabstandeten Stellung und der Aktivierungsstellung zu bewegen;
- eine zweite Antriebsvorrichtung, die dafür ausgelegt ist, die Formungsvorrichtung (22) zwischen der abgerückten Stellung und der Eingriffsstellung zu bewegen;
wobei die erste Antriebsvorrichtung und die zweite Antriebsvorrichtung voneinander unabhängig sind.

7. Vorrichtung nach einem der Ansprüche von 1 bis 3, wobei die Formungsvorrichtung (42) stromaufwärts oder stromabwärts der Heizvorrichtung (121) angeordnet ist, und entlang einer entsprechenden Bewegungsachse (W) bewegbar ist, die parallel zu der Bewegungsachse (Y) der Heizvorrichtung (121) ist, und wobei optional die Trägereinheit (10) entlang eines Verarbeitungspfades bewegbar ist, welcher der Heizvorrichtung (121) und der Formungsvorrichtung (42) zugewandt ist.

8. Vorrichtung nach Anspruch 7, wobei die Vorrichtung eine Verarbeitungseinheit (40) umfasst, die eine Anschlagvorrichtung (41) umfasst, die koaxial im Inneren der Formungsvorrichtung (42) angeordnet ist und entlang der Formungsvorrichtung (42) gleitend verschiebbar ist zwischen einer entsprechenden beabstandeten Stellung und einer entsprechenden Aktivierungsstellung, um mit dem Umfangsflansch (P) zumindest während der Verformung des ringförmigen Wulstes (O) in Eingriff zu gelangen; und wobei optional die Anschlagvorrichtung (41) einen wärmeregulierbaren Eingriffsabschnitt umfasst, der dafür ausgelegt ist, mit dem Umfangsflansch (P) in Eingriff zu treten, um eine Temperatur des Umfangsflanschs (P) zumindest während der Verformung des ringförmigen Wulstes (O) zu regulieren.

9. Vorrichtung nach Anspruch 8, wobei die Anschlagvorrichtung (41) zylinderförmig ist und die Formungsvorrichtung (42) rohrförmig ist und in ihrem Inneren die Anschlagvorrichtung (41) aufnimmt.

10. Vorrichtung nach Anspruch 8, oder 9, wobei die Formungsvorrichtung (42) entlang der Anschlagvorrichtung (41) derart gleitend verschiebbar ist, dass die Formungsvorrichtung (42) von der abgerückten Stellung in die Eingriffsstellung bewegt werden kann, wenn die Anschlagvorrichtung (41) in der Aktivierungsstellung gehalten wird.

11. Vorrichtung nach einem der Ansprüche von 8 bis 10, wobei die Verarbeitungseinheit (40) umfasst:
- eine Verschiebungsvorrichtung, die dafür ausgelegt ist, die Anschlagvorrichtung (41) und die Formungsvorrichtung (42) miteinander integral zwischen der beabstandeten Stellung und der Aktivierungsstellung zu bewegen, und die Formungsvorrichtung (42) zwischen der abgerückten Stellung und der Eingriffsstellung zu bewegen, wenn sich die Anschlagvorrichtung (41) in der Aktivierungsstellung befindet;
- elastische Mittel, die zwischen der Anschlagvorrichtung (41) und der Formungsvorrichtung (42) angeordnet sind, und die dafür ausgelegt sind, eine Rückwärts-/Vorwärtsbewegung zwischen der Anschlagvorrichtung (41) und der Formungsvorrichtung (42) während der Bewegung der Formungsvorrichtung (42) zu vermitteln, und wobei optional die Formungsvorrichtung (42) dafür ausgelegt ist, in der Eingriffsstellung gehalten zu werden, wenn die Anschlagvorrichtung (41) von der Aktivierungsstellung in die beabstandete Stellung bewegt wird; oder wobei die Verarbeitungseinheit (40) umfasst:
- eine erste Betätigungsvorrichtung, die dafür ausgelegt ist, die Anschlagvorrichtung (41) zwischen der beabstandeten Stellung und der Aktivierungsstellung zu bewegen;
- eine zweite Betätigungsvorrichtung, die dafür ausgelegt ist, die Formungsvorrichtung (42) zwischen der abgerückten Stellung und der Eingriffsstellung zu bewegen;
wobei die erste Betätigungsvorrichtung und die zweite Betätigungsvorrichtung voneinander unabhängig sind.

12. Vorrichtung nach einem der Ansprüche von 7 bis 11, wobei die Heizvorrichtung (121) stromabwärts von der Formungsvorrichtung (42) entlang des Verarbeitungspfades angeordnet ist und zumindest ein Heizelement aufweist, das sich entlang eines kreisförmigen Kranzes mit größeren Abmessungen als der Umfangsflansch ("P") erstreckt.

13. Vorrichtung nach Anspruch 12, und eine weitere Heizvorrichtung umfassend, die stromabwärts der Heizvorrichtung (121) angeordnet ist, wobei der Verarbeitungspfad zusätzlich der weiteren Heizvorrichtung zugewandt ist; wobei die weitere Heizvorrichtung zumindest ein Heizelement aufweist, das sich entlang eines kreisförmigen Kranzes mit größeren Abmessungen als der Umfangsflansch (P) erstreckt.

14. Verfahren zum Anbringen eines ringförmigen cellulosebasierten Körpers (A) an einem Umfangsflansch (P) eines Behälters (C), folgende Schritte umfassend:
- Vorbereiten einer Trägereinheit (10), aufweisend einen Durchgangssitz und einen ringförmigen Randabschnitt (11), der den Sitz umgibt;
- Anordnen des ringförmigen Körpers (A) und des Umfangsflansches (P) auf dem ringförmigen tragenden Randabschnitt (11) aufliegend, so dass der ringförmige cellulosebasierte Körper (A) zwischen dem ringförmigen Randabschnitt (11) und dem Umfangsflansch (P) angeordnet ist;
- Zuführen von Wärme zu dem Umfangsflansch (P), um den ringförmigen cellulosebasierten Körper (A) durch den Umfangsflansch (P) zu erwärmen;
**dadurch gekennzeichnet, dass** der Schritt des Zuführens von Wärme zu dem Umfangsflansch (P) mittels folgender Unterschritte ausgeführt wird:
- Inberührungbringen einer Heizvorrichtung (21; 121) mit dem Umfangsflansch (P);
- Aktivieren der Heizvorrichtung (21; 121), um den ringförmigen Körper (A) durch den Umfangsflansch (P) zu erwärmen und wobei das Verfahren ferner beinhaltet
- Verformen eines ringförmigen Endwulstes (O) des Umfangsflanschs (P), wobei der Schritt des Verformens ausgeführt wird, indem der ringförmige Endwulst (O) in eine ringförmige Aussparung (12) der Trägereinheit (10) eingedrückt wird, die außerhalb des ringförmigen Abschnittes (11) angeordnet ist.

15. Verfahren nach Anspruch 14, wobei der Schritt des Verformens des ringförmigen Wulstes (O) nach dem Schritt des Zuführens von Wärme zu dem Umfangsflansch (P) beginnt.

16. Verfahren nach Anspruch 14, oder 15, wobei der Schritt des Verformens des ringförmigen Wulstes (O) endet, bevor der Schritt des Zuführens von Wärme zu dem Umfangsflansch (P) beendet ist, oder wobei der Schritt des Verformens des ringförmigen Wulstes (O) endet, nachdem der Schritt des Zuführens von Wärme zu dem Umfangsflansch (P) beendet ist.

## Revendications

1. Un appareil pour appliquer un corps annulaire (A) à base de cellulose sur une bride périphérique (P) d'un récipient (C), comprenant :
- une unité de support (10) ayant un siège, configuré pour recevoir par insertion un corps dudit récipient (C), et une portion annulaire de bord (11) entourant ledit siège et destinée à recevoir et à supporter le corps annulaire (A) et ladite bride périphérique (P) de manière à ce que le corps annulaire (A) soit interposé en utilisation entre la portion annulaire de bord (11) et la bride périphérique (P) ;
- un dispositif de chauffage (21 ; 121), ladite unité de support (10) et ledit dispositif de chauffage (21 ; 121) étant réciproquement mobiles le long d'un axe de déplacement (X ; W) entre une position espacée dans laquelle le dispositif de chauffage (21 ; 121) est inactif et une position d'activation dans laquelle le dispositif de chauffage (21 ; 121) est actif et est positionné en contact avec la bride périphérique (P) afin de chauffer le corps annulaire (A) à travers ladite bride périphérique (P) ;
où
- l'unité de support (10) comprend un renfoncement annulaire (12), entourant la portion annulaire (11), destiné à loger au moins partiellement un bord roulé annulaire (O) d'extrémité de la bride périphérique (P) ; l'appareil comprenant
- un dispositif de formage (22 ; 42), qui est mobile le long d'un axe de déplacement (X ; Y) respectif entre une position éloignée et une position d'assujettissement dans laquelle ledit dispositif de formage (22 ; 42) assujettit le bord roulé annulaire (O), **caractérisé en ce que** le dispositif de formage (22 ; 42) dans la position d'assujettissement déforme le bord roulé annulaire (O) en poussant ledit bord roulé annulaire (O) dans le renfoncement annulaire (12).

2. L'appareil selon la revendication 1, dans lequel le corps annulaire (A) comprend une structure stratifiée comprenant une couche de matériau adhésif activable à chaud et une couche à base de cellulose, ledit dispositif de chauffage (21) étant configuré pour activer le matériau adhésif à travers la bride périphérique (P) de manière à fixer la bague à la bride périphérique (P) .

3. L'appareil selon la revendication 1 ou 2, dans lequel le dispositif de chauffage (21) a une forme cylindrique et comprend au moins un élément chauffant, de préférence au moins une résistance électrique ou au moins un dispositif à ultrasons, appliqué dans une portion périphérique d'une surface de base du dispositif de chauffage (21), ladite surface de base étant configurée pour s'assujettir avec la bride périphérique (P) au niveau de la portion annulaire (11) lorsque le dispositif de chauffage (21) est dans la position d'activation.

4. L'appareil selon l'une quelconque des revendications précédentes, dans lequel l'appareil comprend une unité opérationnelle (20) comprenant le dispositif de chauffage (21) et le dispositif de formage (22), dans lequel le dispositif de chauffage (21) est logé dans le dispositif de formage (22), le dispositif de formage (22) étant mobile le long du même axe de déplacement (X) le long duquel est mobile le dispositif de chauffage (21) et optionnellement dans lequel le dispositif de chauffage (21) a une forme cylindrique et le dispositif de formage (22) a une forme tubulaire et loge à l'intérieur ledit dispositif de chauffage (21) .

5. L'appareil selon la revendication 4, dans lequel le dispositif de formage (22) peut coulisser le long du dispositif de chauffage (21) de manière à ce que ledit dispositif de formage (22) puisse être déplacé de la position éloignée à la position d'assujettissement lorsque le dispositif de chauffage (21) est maintenu dans la position d'activation.

6. L'appareil selon la revendication 4, ou 5, dans lequel l'unité opérationnelle (20) comprend :
- un dispositif de déplacement configuré pour déplacer de façon mutuellement solidaire le dispositif de chauffage (21) et le dispositif de formage (22) entre la position espacée et la position d'activation, et le dispositif de formage (22) entre la position éloignée et la position d'assujettissement lorsque le dispositif de chauffage (21) est dans la position d'activation ;
- des moyens élastiques interposés entre le dispositif de chauffage (21) et le dispositif de formage (22), configurés pour induire un déplacement en arrière/en avant entre le dispositif de chauffage (21) et le dispositif de formage (22) pendant le déplacement du dispositif de formage (22), et optionnellement dans lequel le dispositif de formage (22) est configuré pour être maintenu dans la position d'assujettissement, lorsque le dispositif de chauffage (21) est déplacé de la position d'activation à la position espacée ; ou dans lequel l'unité opérationnelle (20) comprend :
- un premier dispositif d'entraînement configuré pour déplacer le dispositif de chauffage (21) entre la position espacée et la position d'activation ;
- un deuxième dispositif d'entraînement configuré pour déplacer le dispositif de formage (22) entre la position éloignée et la position d'assujettissement ;
lesdits premier dispositif d'entraînement et deuxième dispositif d'entraînement étant mutuellement indépendants.

7. L'appareil selon l'une quelconque des revendications de 1 à 3, dans lequel le dispositif de formage (42) est positionné en amont ou en aval du dispositif de chauffage (121), et est mobile le long d'un axe de déplacement (W) respectif parallèle à l'axe de déplacement (Y) du dispositif de chauffage (121), et optionnellement dans lequel l'unité de support (10) est mobile le long d'un parcours de traitement faisant face au dispositif de chauffage (121) et au dispositif de formage (42) .

8. L'appareil selon la revendication 7, dans lequel l'appareil comprend une unité de traitement (40) comprenant un dispositif de butée (41) positionné coaxialement à l'intérieur du dispositif de formage (42) et pouvant coulisser le long dudit dispositif de formage (42) entre une position espacée respective et une position d'activation respective pour assujettir ladite bride périphérique (P) au moins pendant la déformation du bord roulé annulaire (O) ; et optionnellement dans lequel le dispositif de butée (41) comprend une portion d'assujettissement thermoréglable destinée à assujettir la bride périphérique (P) pour ajuster une température de ladite bride périphérique (P) au moins pendant la déformation du bord roulé annulaire (O).

9. L'appareil selon la revendication 8, dans lequel le dispositif de butée (41) a une forme cylindrique et le dispositif de formage (42) a une forme tubulaire logeant intérieurement ledit dispositif de butée (41).

10. L'appareil selon la revendication 8, ou 9, dans lequel le dispositif de formage (42) peut coulisser le long du dispositif de butée (41) de manière à ce que ledit dispositif de formage (42) puisse être déplacé de la position éloignée à la position d'assujettissement lorsque le dispositif de butée (41) est maintenu dans la position d'activation.

11. L'appareil selon l'une quelconque des revendications de 8 à 10, dans lequel l'unité de traitement (40) comprend :
- un dispositif de déplacement configuré pour déplacer de façon mutuellement solidaire le dispositif de butée (41) et le dispositif de formage (42) entre la position espacée et la position d'activation, et le dispositif de formage (42) entre la position éloignée et la position d'assujettissement lorsque le dispositif de butée (41) est dans la position d'activation ;
- des moyens élastiques interposés entre le dispositif de butée (41) et le dispositif de formage (42), configurés pour induire un déplacement en arrière/en avant entre le dispositif de butée (41) et le dispositif de formage (42) pendant le déplacement du dispositif de formage (42), et optionnellement dans lequel le dispositif de formage (42) est configuré pour être maintenu dans la position d'assujettissement, lorsque le dispositif de butée (41) est déplacé de la position d'activation à la position espacée ; ou dans lequel l'unité de traitement (40) comprend :
- un premier dispositif d'actionnement configuré pour déplacer le dispositif de butée (41) entre la position espacée et la position d'activation ;
- un deuxième dispositif d'actionnement configuré pour déplacer le dispositif de formage (42) entre la position éloignée et la position d'assujettissement ;
lesdits premier dispositif d'actionnement et deuxième dispositif d'actionnement étant mutuellement indépendants.

12. L'appareil selon l'une quelconque des revendications de 7 à 11, dans lequel le dispositif de chauffage (121) est positionné en aval du dispositif de formage (42) le long du parcours de traitement et a au moins un élément chauffant s'étendant le long d'une couronne circulaire ayant des dimensions supérieures à la bride périphérique ("P").

13. L'appareil selon la revendication 12, et comprenant un autre dispositif de chauffage, positionné en aval du dispositif de chauffage (121), le parcours de traitement faisant en outre face à l'autre dispositif de chauffage ; l'autre dispositif de chauffage ayant au moins un élément chauffant qui s'étend le long d'une couronne circulaire ayant des dimensions supérieures à la bride périphérique (P).

14. Un procédé d'application d'un corps annulaire (A) à base de cellulose sur une bride périphérique (P) d'un récipient (C), comprenant les étapes suivantes :
- préparer une unité de support (10) ayant un siège traversant et une portion annulaire de bord (11) entourant ledit siège ;
- positionner le corps annulaire (A) et ladite bride périphérique (P) en appui sur la portion annulaire de bord (11) de support de manière à ce que le corps annulaire (A) à base de cellulose soit interposé entre la portion annulaire de bord (11) et la bride périphérique (P) ;
- appliquer de la chaleur à la bride périphérique (P) de manière à chauffer le corps annulaire (A) à base de cellulose à travers ladite bride périphérique (P) ; **caractérisé en ce que** l'étape d'application de chaleur à la bride périphérique (P) est effectuée par le biais des sous-étapes suivantes :
- amener un dispositif de chauffage (21 ; 121) en contact avec la bride périphérique (P) ;
- activer le dispositif de chauffage (21 ; 121) de manière à chauffer le corps annulaire (A) à travers ladite bride périphérique (P) et dans lequel le procédé prévoit en outre de
- déformer un bord roulé annulaire (O) de la bride périphérique (P), ladite étape de déformation étant effectuée en poussant le bord roulé annulaire (O) dans un renfoncement annulaire (12) de l'unité de support (10) situé à l'extérieur de la portion annulaire (11).

15. Le procédé selon la revendication 14, dans lequel l'étape de déformation du bord roulé annulaire (O) commence après l'étape d'application de chaleur à la bride périphérique (P).

16. Le procédé selon la revendication 14, ou 15, dans lequel l'étape de déformation du bord roulé annulaire (O) se termine avant la fin de l'étape d'application de chaleur à la bride périphérique (P) ou dans lequel l'étape de déformation du bord roulé annulaire (O) se termine après la fin de l'étape d'application de chaleur à la bride périphérique (P).
